# EUROPEAN PATENT SPECIFICATION

(11) **EP 2 030 379 B1**
(45) Date of publication and mention of the grant of the patent: **16.09.2009**
(21) Application number: 06776165.0
(22) Date of filing: 07.06.2006
(51) Int. Cl.: H04L 12/56, H04L 29/06

(54) **EFFICIENT RESTORATION OF CONNECTIONS IN COMMUNICATION NETWORKS HAVING AN IP-BASED CONTROL PLANE**
EFFIZIENTE WIEDERHERSTELLUNG VON VERBINDUNGEN IN KOMMUNIKATIONSNETZEN MIT EINER IP-BASIERTEN KONTROLLEBENE
RESTAURATION EFFICACE DE CONNEXIONS DANS DES RÉSEAUX DE COMMUNICATION À PLAN DE COMMANDE IP

(43) Date of publication of application: 04.03.2009
(73) Proprietor: Alcatel Lucent, 75008 Paris (FR)
(72) Inventor: DOTARO, Emmanuel, 91370 Verrieres le Buisson (FR); VIGOUREUX, Martin, 75015 Paris (FR)
(74) Representative: Thibaud, Jean-Baptiste
(86) International application number: PCT/EP2006/006693
(87) International publication number: WO 2007/140808

(56) References cited:
- BANERJEE A ET AL: "Generalized Multiprotocol Label Switching: An Overview of Signaling Enhancements and Recovery Techniques" IEEE COMMUNICATIONS MAGAZINE, vol. 39, no. 7, July 2001 (2001-07), pages 144-151, XP011091771 ISSN: 0163-6804 cited in the application
- BERGER L ET AL: "GMPLS Based Segment Recovery 00.txt" IETF INTERNET DRAFT <DRAFT-IETF-CCAMP-GMPLS-SEGMENT-RECOVERY-0 0.TXT, March 2004 (2004-03), XP015016597
- LANG J P ET AL: "RSVP-TE Extensions in support of End-to-End Generalized Multi-Protocol Label Switching (GMPLS)-based Recovery" IETF INTERNET DRAFT <DRAFT-IETF-CCAMP-GMPLS-RECOVERY-E2E-SIGNA LING-03.TXT, April 2005 (2005-04), XP015038129
- BERGER L ET AL: "Generalized Multi-Protocol Label Switching (GMPLS) Signaling" IETF RFC 3473, January 2003 (2003-01), XP015009256
- SHARMA V ET AL: "Framework for Multi-Protocol Label Switching (MPLS)-based Recovery" IETF RFC 3469, February 2003 (2003-02), XP015009252

## Description

The present invention relates generally to communication networks having an Internet Protocol-based control plane, and especially to networks supporting label-switching protocols such as Multi-Protocol Label Switching (MPLS) and its extensions, e.g. Generalized MPLS.

### BACKGROUND OF THE INVENTION

In various types of telecommunication networks, packet-based traffic, especially Internet Protocol traffic, is expected to become the predominant traffic type. At the same time, the demand for bandwidth and for Quality of Service (QoS) guarantees keeps growing as new applications emerge. A unified control plane based on the Internet Protocol (IP), which can be deployed over a number of heterogeneous technologies, is seen as the best way to meet various challenges related to this situation by:
- reducing the operation costs of the network by simplifying its management and reducing the amount of manual management, and by using resources efficiently,
- reducing the equipment costs of the network by reducing the number of independent management systems to be deployed, and
- meeting the QoS requirements, ensuring the scalability of the network and a high level of reliability and availability.

The MPLS and GMPLS suites of protocols provide the basis for such a unified control plane.

"Generalized Multiprotocol Label Switching: An Overview of Signaling Enhancements and Recovery Techniques" A. Banerjee et al. IEEE Communications Magazine, July 2001, p. 144-151 gives an overview of existing fault handling mechanisms under the GMPLS framework. Protection mechanisms using precomputed pre-allocated backup paths are seen as the fastest way of recovering a connection affected by a failure. Since precomputed backup paths rely on a prior knowledge of the network topology and connectivity, situations exist where this type of protection may be inefficient, i.e. if the connectivity or topology has changed somewhere in the network. Indeed routing algorithms such as OSPF-TE or IS-IS-TE may take a substantial time to converge after a change resulting from a failure or signal degradation affecting a network switch or link.

### SUMMARY OF THE INVENTION

It is an object of the invention to provide a method for managing a connection in a communication network having an IP-based control plane in a dynamic, automatized and efficient manner, e.g. in the event of the failure or degradation of a link or node.

To accomplish the above objects and other benefits, the present invention provides a method for managing a connection in a communication network having an IP-based control plane, the method comprising the steps of:
exchanging signaling messages between two ends of the connection along a connection path in the communication network for specifying link resources to be used by the connection, at least one of the signaling messages including a network element identifier identifying a restoration management apparatus associated with the connection,
measuring a physical quality of a link resource connected to a network element belonging to the connection path and including an alternative to the link resources used by the connection, and
sending a link resource report as a control plane message including information about the alternative link resource to the restoration management apparatus from the network element belonging to the connection path, so as to enable the restoration management apparatus to trigger a modification of the connection through the alternative link resource.

It is recalled that the control plane of a network refers to a logical or a physical network entity, which is logically or physically diverse from the data plane. The control plane deals with signaling and routing. The data plane deals with transporting data flows of the users. An IP-based control plane refers to a capability of the network elements to send and receive control traffic using an IP protocol stack.

A network having an IP-based control plane, e.g. an MPLS or GMPLS control plane, benefits from the flexibility and universality of existing packet-based mechanisms, such as Internet Protocol addressing and routing. By using signaling messages to establish a connection or a virtual circuit in the network, it is possible to designate or to reserve resources in order to provide a controlled QoS for a flow. Since the signaling messages travel along the connection path, they are an efficient means for depositing a network element identifier in some or all of the network elements along the connection path, in order to designate a restoration management apparatus for the connection. Hence, during the setup of the connection, network elements along the connection path get prepared for reporting events related to the connection to a dedicated device, especially events which make it necessary to restore the connection. The method ensures that some or all of the network elements involved in the connection know a designated restoration management apparatus, so that reports related to failures can be sent as fast targeted messages and can be treated efficiently by their recipient. A fast notification message provided by the Reservation Protocol with Traffic Engineering extensions (RSVP-TE) can be used for that purpose. This fast notification message is designed so that it is not subject to processing by intermediate nodes-associated control plane controllers, which reduces the transmission delay. Further information about this fast notification message can be found in the Request for Comment 3473 of the Internet Engineering Task Force.

A basic idea of the invention is to provide a "targeted" notification scheme to enable a network element along the connection path or virtual circuit to report an alternative link resource, which could be used for dynamically rerouting or restoring a connection or virtual circuit. Of course, an important application of such a report message relates to fault handling. However, the invention contemplates using such a "targeted" notification message primarily for the purpose of indicating to a restoration management apparatus how the connection could be advantageously modified, but not necessarily that something has failed in the existing connection and what. Hence, a restoration process can be carried out faster and with a better probability of succeeding than in the absence of information related to the alternative link resources.

The information related to a failure or signal degradation in a connection can also be included in the report, so as to be taken into account in a decision process preceding the restoration. Alternatively, this information can be processed locally by the network element having detected the failure, or it could be transmitted using another mechanism.

According to embodiments of the invention, the link resources encompass various types of resources, depending on the physical layer or layers involved in the communication network. A link resource can include a physical port or a physical medium connected to a port, such as an optical fiber, a waveguide, a coaxial cable, or an electrical cable or wire. A link resource can include an electromagnetic link, such as a radio link or a microwave link, or a frequency channel or a set of frequency channels on an electromagnetic link. A link resource can include an optical link, in any part of the spectrum, e.g. visible, infrared or ultraviolet, or a wavelength channel or a set of wavelength channels on an optical link. A link resource can include a timeslot or a set of timeslots on a TDM link, such as an optical link or a radio link or other electromagnetic links. A link resource can include a channel code of a Code Division Multiple Access link.

Various parameters or sets of parameters can be used as a measurement of the physical quality of a link resource, e.g. a received power, a signal-to-noise ratio, a bit error rate, a parameter characterizing crosstalk, a parameter characterizing attenuation, a parameter characterizing dispersion or detuning or others.

According to embodiments of the invention, various types of information can serve to identify an alternative link resource, depending on the type of the link resource to be identified. The information in the link resource report should at least identify the alternative link resource for the recipient to be able to reroute the connection through the identified link resource. For that purpose, the identification information can be selected from a group comprising a network element identifier identifying a source or origin of the link resource, e.g. an IP address or an IP prefix; a physical link identifier, e.g. an IP address or an IP prefix or a link number having local significance at a network element, a generalized label; a channel identifier, e.g. for identifying a electromagnetic channel, a radio frequency channel, an optical wavelength channel or other, and a channel identifier identifying a channel or set of channels in a multiplex, e.g. a timeslot in a TDM signal or a wavelength in a WDM signal. Further ways of identifying numbered or unnumbered links can be found in the Request for Comment 3945 of the Internet Engineering Task Force.

Advantageously, the connection is established as a label-switched path using the RSVP-TE signaling protocol and the link resource report is sent as a fast notification message of the RSVP-TE signaling protocol. An advantage of this embodiment is its interoperability within the MPLS or GMPLS framework. Alternatively, a link resource report can be transported in other types of control plane messages.

According to a specific embodiment, the link resource used by the connection includes a first channel on an air interface of the network element and the alternative link resource includes a second channel on the air interface. This embodiment of the method may be used for the purpose of selecting a best channel on an air interface or for the purpose of roaming in a cellular access network.

The invention also provides a restoration management apparatus for managing the restoration of a connection in a communication network having an IP-based control plane, comprising
a link resource report analysis module for recognizing information about a link resource alternative to the link resources used by the connection in a link resource report received by the restoration management apparatus as a fast notification message of the RSVP-TE signalling protocol and
a restoration controller for triggering a modification of the connection through the alternative link resource.

According to embodiments of the invention, a restoration management apparatus associated with a connection may be of various types. A restoration management apparatus can be a logical device connected to the network and having a capability to trigger the restoration of a connection in response to a link resource report. A restoration management apparatus may be implemented in a network element belonging to the connection path, also known as a point of repair of the connection, e.g. an end of the connection path capable of triggering a restoration of the complete connection path or an intermediate network element capable of triggering a restoration of a portion of the connection path. Alternatively, a restoration management apparatus may be implemented as a centralized device in charge of managing connections in a predefined domain of the network.

According to embodiments of the invention, the restoration management apparatus may further comprise one or several of the following modules:
- a test module for testing a physical condition for restoration of the connection depending on at least one parameter included in the link resource report, said at least one parameter selected from a group comprising a physical quality of a link resource used by the connection and a physical quality of the alternative link resource,
- a path computation module for computing a new path for the connection using the alternative link resource identified in the link resource report, or
- a selection module for selecting an alternative link resource to be used by the modified connection among a plurality of alternative link resources identified in at least one link resource report received by the restoration management apparatus. The selection process can be, for example, based on criteria related to physical quality, routing and/or network management policy.

The invention also provides a network element for a communication network having an IP-based control plane, comprising
a signaling controller for exchanging signaling messages with at least one neighboring network element so as to establish a connection which uses at least one link resource connected to the network element,
a signaling message analysis module for recognizing in at least one of the signaling messages a network element identifier identifying a restoration management apparatus associated with the connection,
a measurement module for measuring a physical quality of a link resource connected to the network element and including an alternative to the link resources used by the connection, and
a link resource report generation module for generating a link resource report including information about the alternative link resource, and for sending the link resource report as a control plane message to the restoration management apparatus identified by the network element identifier.

According to an embodiment of the invention, the measurement module may be arranged to also measure a physical quality of the signal received through the connection.

Advantageously, the network element further comprises a detection module for detecting a link resource report triggering event depending on at least one parameter selected from a group comprising a physical quality of a link resource used by the connection and a physical quality of the alternative link resource, wherein the link resource report generation module is capable of sending a link resource report in response to the triggering event being detected. Alternatively, other types of triggering events can also be used for triggering the emission of link resource reports. Preferably, a report-triggering event is defined so that a link resource report is sent before network connectivity is lost completely.

The report-triggering events may be of various types. According to embodiments of the invention, the report triggering event may be of the type which is detected when the physical quality of the link resource used by the connection falls below a certain value, or of the type which is detected when the physical quality of the alternative link resource exceeds a certain value, or of the type which is detected when the physical quality of the alternative link resource and the physical quality of the link resource used by the connection verify a predefined relation, e.g. the physical quality of the alternative link resource exceeds substantially and/or consistently the physical quality of the link resource used by the connection.

Alternatively or in combination, the physical quality of the alternative link resource and/or of the link resource used by the connection may be processed in a similar manner at the restoration management apparatus, provided that the corresponding information is included in a link resource report. According to a preferred embodiment, the link resource report generation module is capable of including information about the physical quality of the alternative link resource and/or of the link resource used by the connection in a link resource report.

Preferably, the physical quality of the alternative link resource is taken into account at the network element from which the link resource report originates and/or at the restoration management apparatus. Therefore, any alternative link resource having a bad quality link can be eliminated at an early stage of the dynamic restoration process.

According to a specific embodiment, the measurement module is capable of measuring a physical quality of a plurality of alternative link resources connected to the network element. The network element may further comprise a selection module for selecting at least one alternative link resource having a higher level of quality among the plurality of alternative link resources, so as to identify the selected alternative link resource or resources in the link resource report or in several link resource reports. This embodiment ensures that the connection will be restored using the best or one the best links or channels in terms of quality. The selection of a link resource as a function of signal quality can also be performed by the restoration management apparatus. However, the fewer the number of options to be considered by the restoration management apparatus, the faster a new route can be computed.

According to a preferred embodiment, the network element is located at a receiving end of the connection. In many situations, the receiving end of the connection is the most relevant point for evaluating the physical quality of the signal, since there are cases where signal degradation at an intermediate point of the connection may have little impact on the signal received at the end. Thus, unnecessary restoration processes may be avoided with this embodiment.

These and other aspects of the invention will be apparent from and elucidated with reference to the embodiments described hereinafter, by way of example, with reference to the drawings.

### DESCRIPTION OF THE DRAWINGS

Figure 1 illustrates a general embodiment of a communication network where the invention can be implemented.
Figure 2 is a diagram illustrating a flow of messages that are exchanged in the network of figure 1 according to a first embodiment of the method of the invention.
Figures 3 and 4 illustrate other embodiments of a communication network where the invention can be implemented.
Figure 5 is a diagram illustrating a flow of messages that are exchanged in the network of figure 4 according to a second embodiment of the method of the invention.
Figure 6 illustrates a network element according to an embodiment of the invention.
Figure 7 illustrates a network element implementing a restoration management apparatus according to an embodiment of the invention.
Figure 8 illustrates the content of a link resource report according to several embodiments of the invention and corresponding decision steps in which these contents can be used.

### DESCRIPTION OF PREFERED EMBODIMENTS

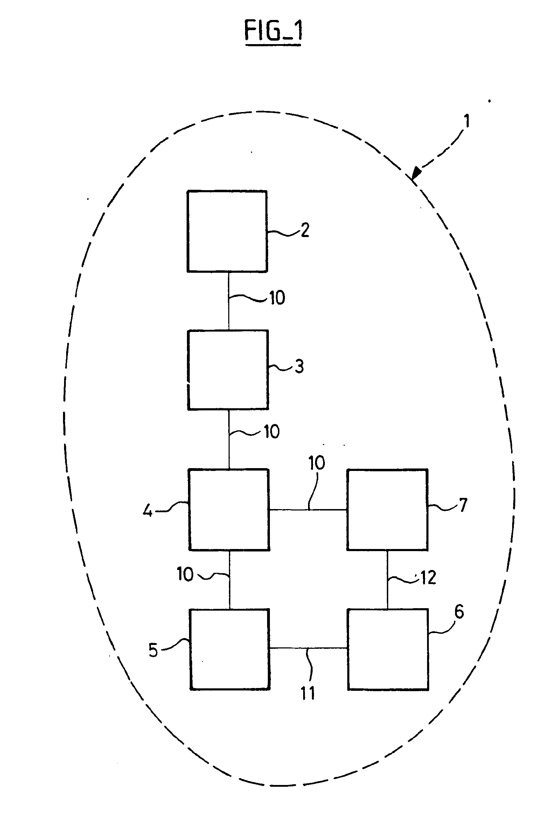

Referring to Figure 1, a communication network 1 where the invention can be implemented is schematically depicted. The network 1 consists of network elements 2, 3, 4, 5, 6, and 7 interconnected by links 10, 11, and 12. A network element refers to a logical device that is capable of originating and/or terminating a data flow and/or switching it on route to its destination. By way of example, the network considered here has a GMPLS control plane. It is recalled that the GMPLS suite of protocols allows the establishment of connections or virtual circuits referred to as label-switched paths (LSP) across a variety of data plane technologies, such as ATM, Frame Relay, Ethernet, SONET/SDH and others. It is recalled that several LSPs can be nested into one another in order to provide a connection across several network elements having different switching capabilities. Hence, depending on the data plane technologies, the term "network element" encompasses routers, e.g. IP routers, switches, e.g. ATM switches, optical cross-connects, photonic cross-connects and others.

The physical nature of the links interconnecting the network elements may be diverse, e.g. optical fibers, Ethernet cables, electromagnetic links and others. In the present embodiment, the network elements comprise GMPLS controllers that exchange control plane IP packets using IP control channels. The control channels can be implemented out-of-fiber or in-fiber, in-band or out-of-band.

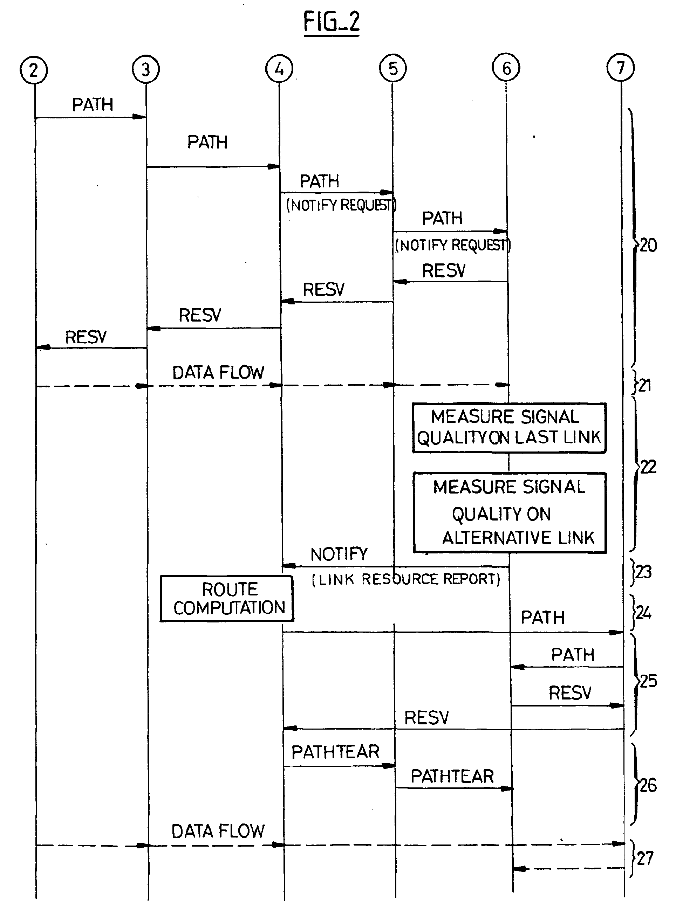

For the purpose of illustration, a specific network topology has been depicted and a corresponding series of steps implementing the method of the invention will be described with reference to figure 2. In the following example, a connection is needed between network element 2, which acts as the ingress node, and network element 6, which acts as the egress node. The connection may be a unidirectional or a bidirectional LSP. Network element 4 is configured to act as the point of repair of the LSP. Network element 3 is an intermediate node between the ingress node and the point of repair. From the point of repair, two routes go to the egress node 6. A first route goes through network element 5 and uses link 11 as the last link. A second route goes through network element 7 and uses link 12 as the last link.

In step 20, the network elements exchange signaling messages to establish the LSP through the first route. For example, the RSVP-TE signaling protocol is used. A PATH message goes from the ingress node to the egress node along the connection path. The egress node responds with a RESV message that takes the same path in the opposite direction. This process enables each network element to specify to the neighboring network elements which link resources, i.e. links and/or ports and/or channels, will be used for this LSP. Resources can be reserved in order to provide a controlled QoS. As this protocol is well known in the art, the detailed contents of the PATH and RESV messages need no further description here.

The ingress node 2 or another network element along the path inserts a NOTIFY REQUEST object in a signaling message so as to designate the point of repair of the LSP. In the depicted embodiment, network element 4 inserts the NOTIFY REQUEST object in the PATH message. Alternatively, the NOTIFY REQUEST object can be used in a RESV message. The NOTIFY REQUEST object includes an identifier of network element 4, e.g. an IP address. After the ingress node receives the RESV message, the LSP is established.

In step 21, the LSP serves to transfer a data flow from the ingress node to the egress node.

In step 22, during the transfer, network element 6 measures the quality of the signal received on the link 11 that carries the LSP. Network element 6 measures also the quality of the signal received on the other links connected to it and suitable for carrying the LSP. In the depicted example, network element 6 measures the quality of the signal received on the link 12, which is not used by the LSP.

In step 23, network element 6 detects a report-triggering event. In response to the event, network element 6 forms a control plane message and sends it the previously identified point of repair, i.e. network element 4. For example, the NOTIFY message of the RSVP-TE protocol is used, which is a fast notification message. Network element 6 includes a link resource report in the control plane message, for example in the form of a new object adapted for the RSVP-TE protocol. The link resource report includes information related to the alternative link 12, i.e. at least data identifying the alternative link 12. The notification message can include an identifier of the detecting network element 6, e.g. an IP address in an ERROR-SPEC object of the RSVP-TE protocol.

For example, if link 12 is an optical fiber, it may be treated as a numbered link, i.e. it has an IP address that uniquely identifies it, or it may be treated as an unnumbered link. An unnumbered link can be identified by the IP address of the network element from which the link originates, combined with an identifier of the corresponding interface of the originating network element. For example, if link 12 is connected to network element 7 at an interface that is referred to as interface number 3 in network element 7, the link resource report will identify link 12 with the pair (IP address of network element 7, interface number 3). Routing protocols such as OSPF-TE or IS-IS-TE enable neighboring nodes to exchange connectivity information such as the numbering of their interfaces. Therefore a proper identifier for link 12 to be included in the link resource report can be found for example in a Traffic Engineering Database or a routing table of network element 6.

In step 23, the link resource report is received by the point of repair, which analyzes its content and uses this information for deciding if the LSP should be restored through the alternative link identified in the link resource report. The point of repair may send an acknowledgement of receipt to the network element 6.

In step 24, the point of repair 4 computes a new route for the LSP to use the alternative link identified in the link resource report.

In step 25, when the restoration decision is taken, the point of repair 4 triggers a path level restoration or a span level restoration of the LSP through the alternative route. For example, the EXPLICIT ROUTE object of the RSVP-TE protocol is used. An explicit label control method, e.g. a LABEL SET object, can be used for further specifying a link or channel to be used by the restored LSP. When the signaling process is completed, the LSP can again serve to transfer a data flow from the ingress node to the egress node. The data flow will follow the new route through network element 7, as depicted in step 27.

In step 26, the point of repair removes the old LSP in order to release corresponding resources at network elements 5 and 6. A PATHTEAR message can be used. Alternatively, the old LSP could be removed by merely suppressing refresh messages until a timeout occurs.

As a result of the above sequence of steps, the restored LSP goes around network element 5 and link 11 without using them anymore. Therefore, this method can be applied in the case of a failure of network element 5 or link 11. This method can also be applied in any other situation where a benefit can be obtained from routing the LSP through the new route instead of the old route. For example, such a benefit could be a better balancing of load in the network or an improved signal quality at the egress node. Accordingly, a number of options exist with respect to the nature of the report triggering event, the content of the link resource report and the basis for the restoration decision. Further, since multiple criteria should typically be taken into account for deciding to restore the LSP through the alternative link 12, the steps contributing to such a decision can be distributed in diverse manners among network element 6 and the point of repair. Other devices, such as a path computation element, may also be involved in the decision process.

According to embodiments of the invention, the report-triggering event detected in step 23 can be defined in a simple or in a complex manner. Preferably the report-triggering event includes at least one event selected from the following:
- A predefined period of time has elapsed since the last link resource report was sent,
- The quality of the signal received through the connection is low or is degrading,
- The quality of the signal on an alternative link or channel measured by the network element is good or is improving,
- The quality of the signal on an alternative link or channel measured by the network element is better than the quality of the signal received through the connection.
Report-triggering events having a well-focused definition can be preferred, so as to hold down the amount of corresponding control traffic to be transported in the network.

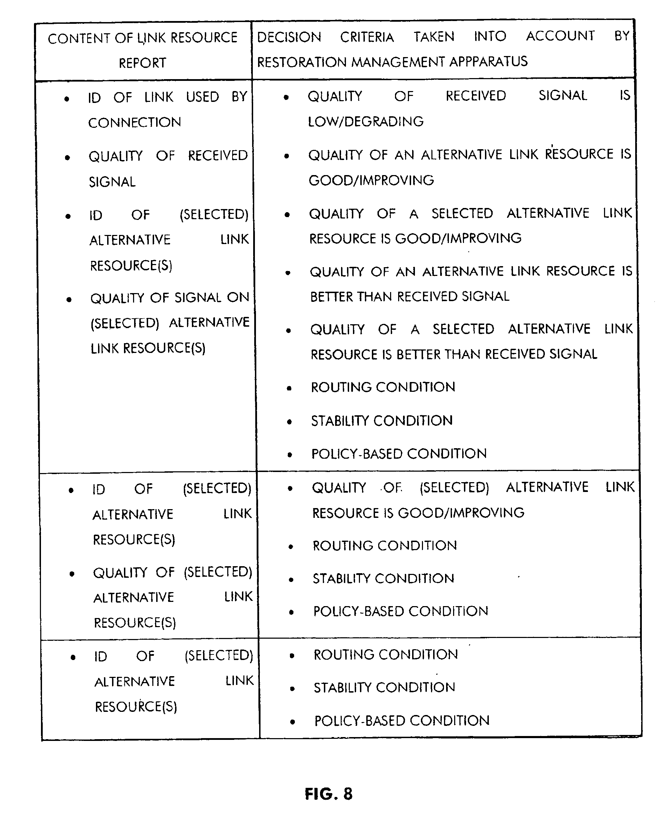

Figure 8 provides three illustrative examples of how the restoration decision process of step 25 may be carried out and corresponding contents of the link resource report to be used in this process by the restoration management apparatus, e.g. network element 4.

In the first example, the link resource report includes information about the quality of both the current connection and the alternative resource. Therefore, the restoration management apparatus can take into account both parameters in the decision process. In the second example, the link resource report includes no explicit information about the quality of the current connection. Accordingly, the size of the message is reduced. This type of report can be used in combination with a report-triggering event that already involves the quality of the signal received through the connection. Therefore the point of repair need not check again the quality of the connection, so that a restoration decision can be taken faster. In the third example, the link resource report includes no explicit information about the quality of the current connection and the quality of the alternative resource. Accordingly, the size of the message is further reduced. This type of report can be used in combination with a report-triggering event that already involves the quality of both the current connection and the alternative resource. Therefore the restoration management apparatus need not check again these criteria, so that a restoration decision can be taken even faster.

In all examples, the decision criteria taken into account by the restoration management apparatus can be less than those recited in Figure 8 or can include other criteria. Preferably, the restoration management apparatus takes into account at least one criteria selected from the group comprising a physical condition for restoration, a routing condition and a stability condition. A stability condition refers to a condition that will avoid modifying the LSP too frequently, which could be a risk when several links are available with a similar level of quality. A routing condition refers to a condition that characterizes the availability of a route to the alternative link resource that satisfies the traffic engineering requirements of the LSP, e.g. bandwidth or latency.

As an illustration, in the embodiment of figures 1 and 2, we may consider here that links 11 and 12 are optical fibers carrying an optical signal. Network element 6 is supposed to monitor periodically or permanently the quality of signal received on its interfaces. In step 23, network element 6 detects a loss of light on the optical port connected to link 11, which constitutes a report-triggering event. At this instant, a signal having a good quality is monitored at the port connected to link 12. Therefore, a link resource report comprising an ID of link 12 is sent to network element 4.

In the embodiment of figures 1 and 2, the LSP is restored through a different physical link and a different network element. However, the same method can be used to restore a LSP through an alternative link originating from the same network element as the existing LSP or through an alternative channel on the same link as the existing LSP. For example, in a modified embodiment, link 11 carries a WDM signal. In step 23, network element 6 detects a loss of light on a specific wavelength channel used by the LSP, which constitutes a report-triggering event. At this instant, a signal having a good quality is monitored on the same link 11 on another wavelength channel that is not used by the LSP. Network element 6 forms and sends a link resource report comprising an ID of link 11 and an ID of the alternative wavelength channel. The physical quality of the alternative channel can be measured by monitoring the signal carrying a data flow, if any, or by monitoring a dedicated signal, such as a beacon signal.

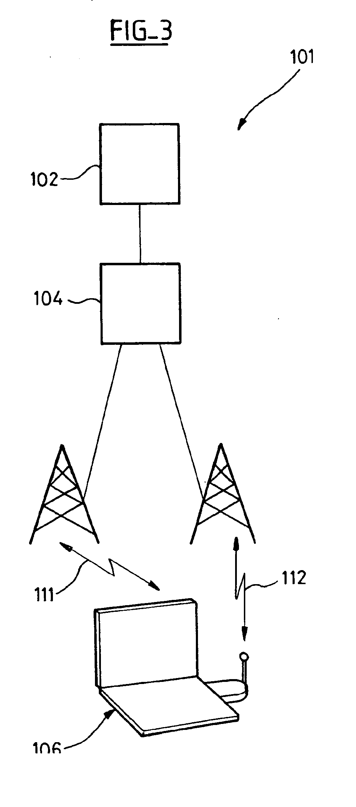

Figure 3 shows another embodiment of a network where the above-described method can be implemented. Elements identical or similar to those of Figure 1 are designated by the same reference number increased by 100. In this embodiment, the network element 106 is connected to the rest of the network 101 by an electromagnetic link on an air interface. Any type of wireless technology can serve as the electromagnetic link, i.e. GSM/EDGE, GPRS, UMTS, mobile broadband HSDPA, WiMax, WiFi, Unlicensed Mobile Access and others. The network element 106 can be implemented in a fixed wireless terminal, a mobile wireless terminals or a nomadic wireless terminal. Network 101 represents a wireless local area network or a radio access network having an MPLS or GMPLS control plane. The method for establishing and restoring a LSP between network elements 102 and 106 can be easily deduced from figure 2. Therefore, only features specific to the electromagnetic link will be described here.

The wireless terminal is supposed to receive at least two different radio channels 111 and 112 from the network element 104, which constitutes a base station, Node B, WiMax access point or similar . The radio channels may originate from different antennas as depicted, or from a common antenna (not shown). Initially, the LSP uses channel 111. The wireless terminal 106 is supposed to monitor permanently or periodically the quality of every available radio channels. The base station may emit periodic beacon signals for that purpose, as is well known in the art. At an instant in time, the wireless terminal 106 detects a report triggering-event. For example, the quality of channel 111 falls down below a predefined value. This may result from a change in the electromagnetic environment of the wireless terminal or from a change in the number of users connected to the base station or other unpredictable events. Among all the received channels, the wireless terminal 106 detects the best channel, e.g. channel 112, and forms a link resource report identifying this channel. The channel identifier may be a dedicated label, which can be used by the predefined point of repair, e.g. base station 104, or ingress node 102, to redirect the LSP on channel 112 using an explicit label control technique. The above method can serve to execute a so-called intra-cell handover in a wireless network having an IP-based control plane.

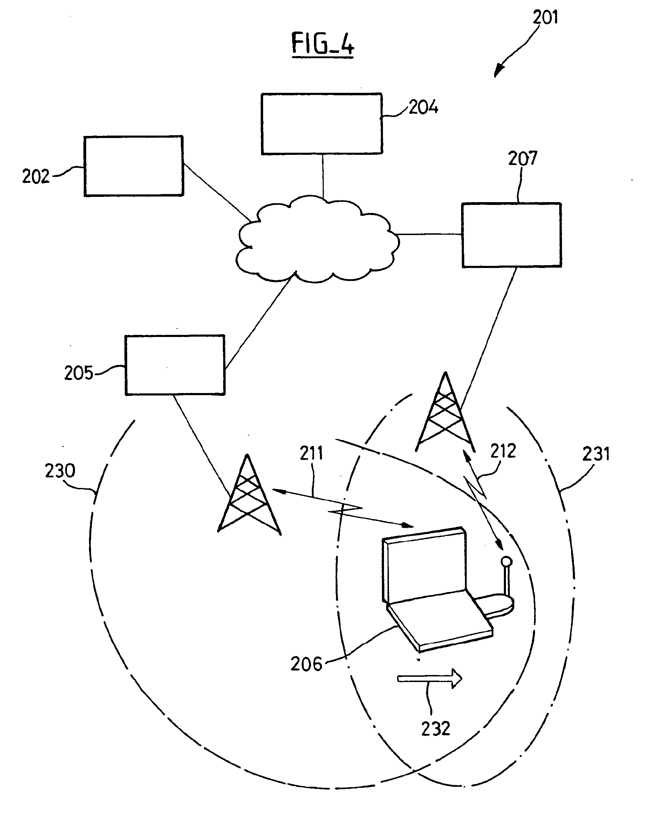

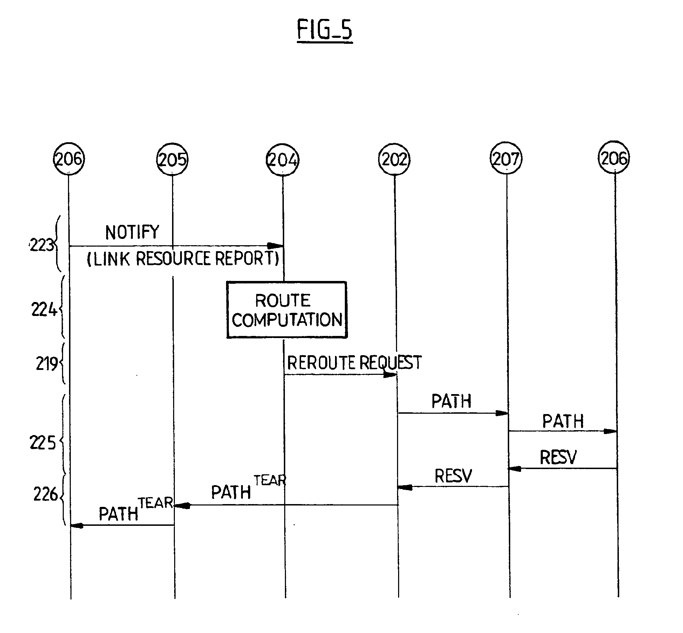

With reference to figures 4 and 5, we describe now another embodiment of the method applicable to inter-cell handover in a wireless network. Elements identical or similar to those of Figure 1 are designated by the same reference number increased by 200. In this embodiment, the wireless network 201 includes two base stations 205 and 207, which cover two neighboring cells 230 and 231. A connection such as an LSP has been set up between network element 202 and network element 206, which is implemented as a wireless terminal, e.g. a smartphone or a laptop computer with a wireless interface card. During the setup of the LSP using RSVP-TE signaling, network element 204 has been designated as the restoration management apparatus. In other words, an IP address of network element 204 has been communicated to the terminal 206, e.g. in a NOTIFY REQUEST object. In this embodiment, network element 204 represents a central I management device in charge of a certain domain in the network. Network element 204 is not included in the connection path of the LSP.

As indicated by arrow 232, the wireless terminal 206 is supposed to be moving from cell 230 to cell 231 while receiving a data flow on the LSP. At a certain point, a report-triggering event resulting from that move is detected by the wireless terminal, e.g. the signal quality on channel 212 coming from base station 207 becomes consistently better than channel 211, which is currently used.

In step 223, in response to that detection, wireless terminal 206 sends a NOTIFY message to the predefined restoration management apparatus 204. The message includes a link resource report identifying channel 212 coming from base station 207 as the best alternative link.

In step 224, the restoration management apparatus 204 receives the NOTIFY message, recognizes the content of the link resource report and executes a decision process for deciding if the LSP can be rerouted through the alternative link. For example, a route computation is carried out by the apparatus 204 or is requested by the apparatus 204 to a dedicated device, such as a path computation element. The apparatus 204 can check administrative data in a client profile to ascertain that the terminal is allowed to connect to the new cell.

In step 219, when an appropriate route from the ingress node 202 to the base station 207 has been found and when other decision criteria are fulfilled, if any, the apparatus 204 sends a reroute request to a point of repair of the LSP, e.g. ingress node 202. The reroute request can be delivered by any of a number of protocols, such as the Simple Network Management Protocol (SNMP), Command Line Interface (CLI) or Common Open Policy Service (COPS), depending on what is supported by the network element 202. The reroute request contains the new route to be followed by the LSP and an identifier of the channel to be used.

In step 225, the point of repair redirects the LSP through the new route using RSVP-TE signaling with an Explicit Route object and an explicit label, which designates channel 212. In step 226, the resources reserved for the LSP on the old route are freed.

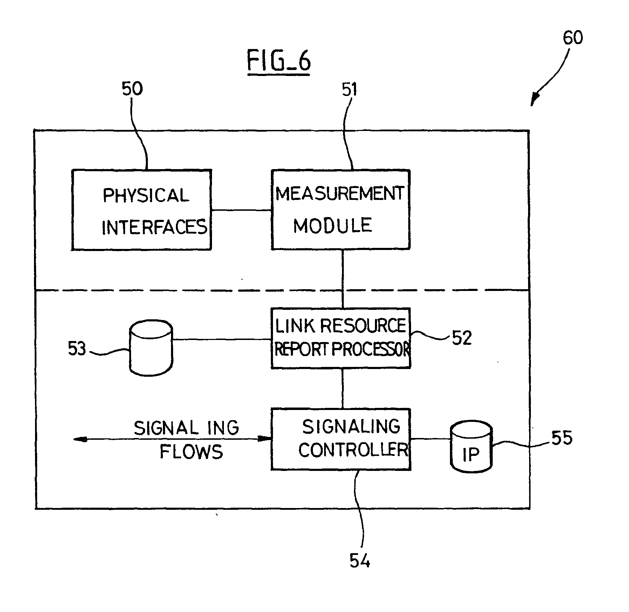

Figure 6 is a simplified functional view of an embodiment of a network element according to the invention, suitable to implement network element 6 or 106 or 206. The network element 60 comprises physical interfaces 50, e.g. a radio interface or physical ports. A measurement module 51 is arranged to measure one or several quantities representing a physical quality for each link or channel connected to the interfaces 50. Various quantities can be measured, e.g. a received power on a radio channel or wavelength channel, a signal strength, a signal-to-noise ratio, a bit error rate, a parameter characterizing crosstalk, a parameter characterizing attenuation, a parameter characterizing dispersion or detuning or others. The measurement module can include dedicated sensors to make the measurements. Alternatively, the measurement module can proceed to obtain the quality measurements from the signals produced by sensors provided for other purposes, e.g. signal reception and demodulation. The data representing the quality of each link or channel is stored in a memory or other data storage for a link resource report processor 52 to access it.

The link resource report processor 52 deals with two types of tasks. It detects report-triggering events in accordance with the type of events defined in its program. Examples of report-triggering events have been given above. The link resource report processor 52 forms a corresponding link resource report when a report-triggering event is detected. Examples of link resource reports have been given above. The link resource report processor 52 can access the data provided by the measurement unit 51 in order to include such data in a report. The link resource report processor 52 can access a memory or other data storage 53 storing link and channel identifiers, e.g. IP addresses and interface IDs, in order to include such data in a report. A link resource report should include an identifier of the connection to which it relates, e.g. an LSP ID.

The link resource report processor 52 passes the link resource report to a signaling controller 54, e.g. an RSVP-TE controller, for sending the report in a control-plane message targeted to a restoration management apparatus associated with the connection. The signaling controller 54 is also programmed to exchange signaling messages with neighboring nodes at the time of establishing a connection. Another primitive of the signaling controller 54 analyzes the signaling messages received by the network element and recognizes the identifier of a restoration management apparatus associated with a connection, e.g. in a NOTIFY REQUEST object. The signaling controller 54 cooperates with an IP routing stack 55 to send and receive control traffic.

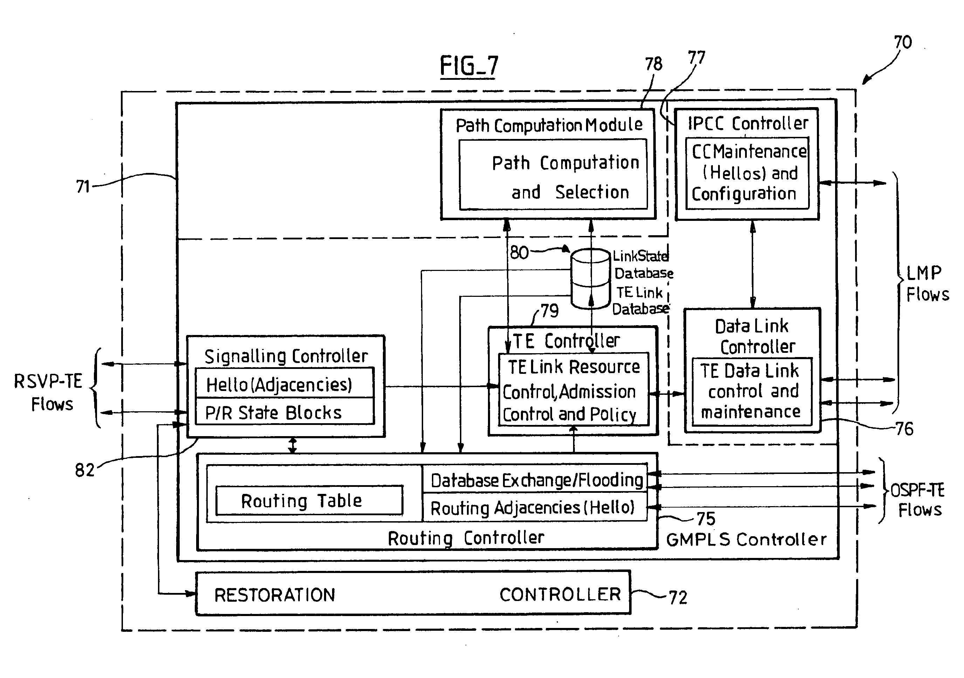

The detecting and reporting network element 60 can be located at an end of the connection, as depicted in the embodiments of Figures 1, 3 and 4. Alternatively, it could be located at any other point in the network. Therefore, network element 60 can include other functional modules, especially those typical of a network node. For example, network element 60 can include a GMPLS controller as depicted in Figure 7.

Figure 7 illustrates an embodiment of a restoration management apparatus 70 suitable to implement a point of repair located on a connection path. The restoration management apparatus 70 comprises a signaling controller 82 and a restoration controller 72. In the illustrated embodiment, the signaling controller 82 is implemented as a component of a GMPLS controller 71. The GMPLS controller includes well known software components, such as a routing controller 75 e.g. based on the OSPF-TE or IS-IS-TE protocols, a data link controller 76, a Control Channel controller 77, a path computation module 78, a traffic engineering controller 79 and related databases 80.

The signaling controller 82, e.g. based on the RSVP-TE protocol, is in charge of forming, sending and receiving signaling messages. The signaling controller 82 analyzes the messages that it receives, recognizes the objects and passes the corresponding data to the other components for further processing. Upon reception of a link resource report, the signaling controller 82 passes the corresponding information to the restoration controller 72. The information relating to the identity and signal quality of an alternative link resource for an LSP can be stored in a memory or other data storage component for the restoration controller 72 to access it.

Restoration controller 72 is in charge of two main functions. Firstly, upon reception of a link resource report related to an LSP, it controls a decision process to decide if the LSP must be modified or not. Examples of decision criteria taken into account by restoration controller 72 have been given above. Secondly, when the LSP must be modified, restoration controller 72 computes or collects the parameters which define how the LSP should be modified, e.g. selected link resources to be used, and passes them to the signaling controller 82. Restoration controller 72 can interact with the path computation module 78 to obtain an appropriate route passing through the selected alternative link resources. Alternatively, restoration controller 72 can assign the constrained route calculation task to an external device.

Finally, signaling controller 82 emits the appropriate signaling flows for modifying or restoring the LSP through the new route and for releasing resources along the former connection path. The modified LSP can keep some parameters of the old LSP, e.g. LSP ID, Tunnel ID, Sender Template, Session object or others.

A restoration management apparatus can be implemented in a collocated manner or in a distributed manner. A communication network can comprise a restoration management apparatus at a single location in the network or a plurality of restoration management apparatuses at a plurality of locations in the network, e.g. at each node.

A communication network can comprise a network element according to the invention at a single location in the network or a plurality of network elements according to the invention at a plurality of locations in the network, e.g. at each node. Further, a network element and a restoration management apparatus according to the invention can be implemented in a collocated or integrated manner.

The inventive solution provides a method and devices for fast and reliable restoration of connections, which is especially suitable for a communication network experiencing frequent changes in its topology or connectivity, e.g. due to the mobility of network elements or due to the presence of links likely to be affected by changes in their environment, especially electromagnetic links.

In another embodiment of the invention, the restoration management apparatus uses the information received in a link resource report to select one among a plurality of precomputed protection paths, or to further specify a precomputed protection path.

The drawings disclose networks having a specific size and topology by way of illustration only. The invention applies to networks of any size or topology.

Whereas the above-described embodiments rely on the RSVP-TE signaling protocol, the invention may be implemented with other signaling protocols providing (i) functions similar to the NOTIFY REQUEST object and (ii) control plane messages suitable for transporting a link resource report. Preferably, a fast message similar to the NOTIFY message of RSVP-TE is used.

The person skilled in the art will appreciate that the steps recited in the claims or the description can be carried out in a different sequence or in a simultaneous manner without departing from the scope of the invention.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several «modules».

In the claims, any reference signs placed between parentheses shall not be construed as limiting the scope of the claims.

## Claims

1. A method for managing a connection in a communication network (1, 101, 201) having an IP-based control plane, the method comprising the steps of:
exchanging signaling messages (20) between two ends of the connection along a connection path in the communication network for specifying link resources to be used by the connection, at least one of the signaling messages including a network element identifier (NOTIFY REQUEST) identifying a restoration management apparatus (4, 104, 204) associated with the connection,
**characterized by** the steps of:
measuring a physical quality (22) of a link resource (12, 112, 212) connected to a network element (6, 106, 206) belonging to the connection path and including an alternative to the link resources used by the connection, and
sending a link resource report (23) as a control plane message including information about the alternative link resource to the restoration management apparatus from the network element belonging to the connection path, so as to enable the restoration management apparatus to trigger a modification of the connection (25) through the alternative link resource.

2. The method as claimed in claim 1, wherein the connection is established as a label-switched path using the RSVP-TE signaling protocol and wherein the link resource report is sent as a fast notification message of the RSVP-TE signaling protocol.

3. The method as claimed in claim 1 or 2, wherein the link resource used by the connection includes a first channel (111, 211) on an air interface of the network element and the alternative link resource includes a second channel (112, 212) on an air interface of the network element.

4. The method as claimed in any one of claims 1 to 3, wherein the network element (6, 106, 206) is located at a receiving end of the connection.

5. A restoration management apparatus (70) for managing the restoration of a connection including a label-switched path in a communication network having an IP-based control plane, comprising
a restoration controller (72) for triggering a modification of the connection through a link resource alternative to the link resources formerly used by the connection,
**characterized in that** it comprises a link resource report analysis module (82) for recognizing information about the alternative link resource in a link resource report received by the restoration management apparatus as a fast notification message of the RSVP-TE signaling protocol.

6. The restoration management apparatus as claimed in claim 5, further comprising a test module (72) for testing a physical condition for restoration of the connection depending on at least one parameter included in the link resource report, said at least one parameter selected from a group comprising a physical quality of a link resource used by the connection and a physical quality of the alternative link resource.

7. The restoration management apparatus as, claimed in claim 5 or 6, further comprising a path computation module (78) for computing a new path for the connection using the alternative link resource identified in the link resource report.

8. The restoration management apparatus as claimed in any one of claims 5 to 7, further comprising a selection module (72) for selecting an alternative link resource to be used by the modified connection among a plurality of alternative link resources identified in at least one link resource report received by the restoration management apparatus.

9. A network element (60) for a communication network having an IP-based control plane, comprising
a signaling controller (54) for exchanging signaling messages with at least one neighboring network element (5, 7, 104, 205, 207) so as to establish a connection which uses at least one link resource (11, 111, 211) connected to the network element,
a signaling message analysis module (54) for recognizing in at least one of the signaling messages a network element identifier (NOTIFY REQUEST) identifying a restoration management apparatus associated with the connection,
a measurement module (51) for measuring a physical quality of a link resource (12, 112, 212) connected to the network element and including an alternative to the link resources used by the connection, and
a link resource report generation module (52, 54) for generating a link resource report including information about the alternative link resource, and for sending the link resource report as a control plane message to the restoration management apparatus identified by the network element identifier.

10. The network element as claimed in claim 9, wherein the link resource used by the connection includes a first channel (111, 211) on an air interface of the network element and the alternative link resource includes a second channel (112, 212) an air interface of the network element.

11. The network element as claimed in claim 9 or 10, further comprising a detection module (52) for detecting a link resource report triggering event depending on at least one parameter selected from a group comprising a physical quality of a link resource used by the connection and a physical quality of the alternative link resource, wherein the link resource report generation module is capable of sending a link resource report in response to the triggering event being detected.

12. The network element as claimed in any one of claims 9 to 11, wherein the connection is established as a label-switched path using the RSVP-TE signaling protocol and wherein the link resource report is sent as a fast notification message of the RSVP-TE signaling protocol.

13. The network element as claimed in any one of claims 9 to 12, wherein the measurement module is capable of measuring a physical quality of a plurality of alternative link resources connected to the network element.

14. The network element as claimed in claim 13, further comprising a selection module (52) for selecting at least one alternative link resource having a higher level of quality among the plurality of alternative link resources, so a to identify the selected at least one alternative link resource in the link resource report.

15. The network element as claimed in any one of claims 9 to 14, wherein the network element (6, 106, 206) is located at a receiving end of the connection.

16. The network element as claimed in any one of claims 9 to 15, wherein the link resource report generation module (52) is capable of including information about the physical quality of the alternative link resource in a link resource report.

## Patentansprüche

1. Ein Verfahren zum Verwalten einer Verbindung in einem Kommunikationsnetzwerk (1, 101, 201) mit einer IP-basierten Steuerebene, wobei das Verfahren die folgenden Schritte umfasst:
Austauschen von Signalisierungsnachrichten (20) zwischen zwei Enden der Verbindung entlang einen Verbindungspfad im Kommunikationsnetzwerk zum Spezifizieren von von der Verbindung zu benutzenden Link-Ressourcen, wobei mindestens eine der Signalisierungsnachrichten eine Netzelementkennung (NOTIFY REQUEST) enthält, welche eine der Verbindung zugeordnete Wiederherstellungsverwaltungseinrichtung (4, 104, 204) identifiziert,
**gekennzeichnet durch** die folgenden Schritte:
Messen einer physikalischen Qualität (22) einer Link-Ressource (12, 112, 212), welche an ein dem Verbindungspfad angehörendes Netzwerkelement (6, 106, 206) angeschlossen ist, einschließlich einer alternativen Link-Ressource zu den von der Verbindung benutzten Link-Ressourcen, und
Senden eines Link-Ressourcenberichts (23) als eine Steuerebenennachricht, welche Informationen über die alternative Link-Ressource enthält, an die Wiederherstellungsverwaltungseinrichtung von dem Netzwerkelement, welches dem Verbindungspfad angehört, um die Wiederherstellungsverwaltungseinrichtung zu befähigen, eine Änderung der Verbindung (25) über die alternative Link-Ressource zu triggern.

2. Das Verfahren nach Anspruch 1, wobei die Verbindung als ein Label-Switched-Pfad unter Verwendung des RSVP-TE-Signalisierungsprotokolls aufgebaut wird, und wobei der Link-Ressourcenbericht als eine schnelle Meldenachricht des RSVP-TE-Signalisierungsprotokolls gesendet wird.

3. Das Verfahren nach Anspruch 1 oder 2, wobei die von der Verbindung benutzte Link-Ressource einen ersten Kanal (111, 211) an einer Luftschnittstelle des Netzwerkelements umfasst, und wobei die alternative Link-Ressource einen zweiten Kanal (112, 212) auf einer Luftschnittstelle des Netzwerkelements umfasst.

4. Das Verfahren nach einem beliebigen der Ansprüche 1 bis 3, wobei das Netzwerkelement (6, 106, 206) an einem empfangenden Ende der Verbindung angeordnet ist.

5. Eine Wiederherstellungsverwaltungseinrichtung (70) zum Verwalten der Wiederherstellung einer Verbindung mit einem Label-Switched-Pfad in einem Kommunikationsnetzwerk mit einer IP-basierten Steuerebene, umfassend:
Einen Wiederherstellungs-Controller (72) zum Triggern einer Änderung der Verbindung über eine Link-Ressource als Alternative zu den zuvor von der Verbindung benutzten Link-Ressourcen,
**dadurch gekennzeichnet, dass** sie ein Link-Ressourcenbericht-Analysemodul (82) umfasst, welches die Informationen über die alternative Link-Ressource in einem von der Wiederherstellungsverwaltungseinrichtung empfangenen Link-Ressourcenbericht als eine schnelle Meldenachricht des RSVP-TE-Signalisierungsprotokoll erkennt.

6. Die Wiederherstellungsverwaltungseinrichtung nach Anspruch 5, weiterhin umfassend ein Test-Modul (72) zum Testen einer physikalischen Bedingung zur Wiederherstellung der Verbindung in Abhängigkeit von mindestens einem aus einer Gruppe, welche eine physikalische Qualität einer von der Verbindung benutzten Link-Ressource und eine physikalische Qualität der alternativen Link-Ressource umfasst, ausgewählten Parameter.

7. Die Wiederherstellungsverwaltungseinrichtung nach Anspruch 5 oder 6, weiterhin umfassend ein Pfadberechnungsmodul (78) zum Kalkulieren eines neuen Pfads für die Verbindung unter Benutzung der im Link-Ressourcenbericht identifizierten alternativen Link-Ressource.

8. Die Wiederherstellungsverwaltungseinrichtung nach einem beliebigen der Ansprüche 5 bis 7, weiterhin umfassend ein Auswahlmodul (72) zum Auswählen einer von der geänderten Verbindung zu benutzenden alternativen Link-Ressource aus einer Vielzahl von in mindestens einem an der Wiederherstellungsverwaltungseinrichtung empfangenen Link-Ressourcenbericht identifizierten alternativen Link-Ressourcen.

9. Ein Netzwerkelement (60) für ein Kommunikationsnetzwerk mit einer IP-basierten Steuerebene, umfassend:
Einen Signalisierungs-Controller (54) zum Austauschen von Signalisierungsnachrichten mit mindestens einem benachbarten Netzwerkelement (5, 7, 104, 205, 207), um eine Verbindung, welche mindestens eine an das Netzwerkelement angeschlossene Link-Ressource (11, 111, 211) benutzt, aufzubauen
ein Signalisierungsnachrichten-Analyse-Modul (54) zum Erkennen in mindestens einer der Signalisierungsnachrichten einer Netzelementkennung (NOTIFY REQUEST), welche eine der Verbindung zugeordnete Wiederherstellungsverwaltungseinrichtung identifiziert,
ein Messmodul (51) zum Messen einer physikalischen Qualität einer an das Netzwerkelement angeschlossenen Link-Ressource (12, 112, 212), einschließlich einer Alternative zu den von der Verbindung verwendeten Link-Ressourcen, und
ein Link-Ressourcenbericht-Erzeugungsmodul (52, 54) zum Erzeugen eines Link-Ressourcenberichts mit Informationen über die alternative Link-Ressource, und zum Senden des Link-Ressourcenberichts als eine Steuerebenennachricht an die anhand der Netzelementkennung identifizierte Wiederherstellungsverwaltungseinrichtung.

10. Das Netzwerkelement nach Anspruch 9, wobei die von der Verbindung benutzte Link-Ressource einen ersten Kanal (111, 211) auf einer Luftschnittstelle des Netzwerkelements und die alternative Link-Ressource einen zweiten Kanal (112, 212) auf einer Luftschnittstelle des Netzwerkelements umfasst.

11. Das Netzwerkelement nach Anspruch 9 oder 10, weiterhin umfassend ein Erfassungsmodul (52) zum Erfassen eines Link-Ressourcenbericht-Triggerereignisses in Abhängigkeit von mindestens einem aus einer Gruppe, welche eine physikalische Qualität einer von der Verbindung benutzten Link-Ressource und eine physikalische Qualität der alternativen Link-Ressource umfasst, ausgewählten Parameter, wobei das Link-Ressourcenbericht-Erzeugungsmodul dazu ausgelegt ist, einen Link-Ressourcenbericht in Antwort auf das erfasste Triggerereignis zu senden.

12. Das Netzwerkelement nach einem beliebigen der Ansprüche 9 bis 11, wobei die Verbindung als ein Label-Switched-Pfad unter Verwendung des RSVP-TE-Signalisierungsprotokolls aufgebaut wird, und wobei der Link-Ressourcenbericht als eine schnelle Meldenachricht des RSVP-TE-Signalisierungsprotokolls gesendet wird.

13. Das Netzwerkelement nach einem beliebigen der Ansprüche 9 bis 12, wobei das Messmodul dazu ausgelegt ist, eine physikalische Qualität einer Vielzahl von an das Netzwerkelement angeschlossenen alternativen Link-Ressourcen zu messen.

14. Das Netzwerkelement nach Anspruch 13, weiterhin umfassend ein Auswahlmodul (52) zum Auswählen von mindestens einer alternativen Link-Ressource, welche unter der Vielzahl von alternativen Link-Ressourcen eine höhere Qualität aufweist, um die ausgewählte mindestens eine alternative Link-Ressource im Link-Ressourcenbericht zu identifizieren.

15. Das Netzwerkelement nach einem beliebigen der Ansprüche 9 bis 14, wobei das Netzwerkelement (6, 106, 206) an einem empfangenden Ende der Verbindung angeordnet ist.

16. Das Netzwerkelement nach einem beliebigen der Ansprüche 9 bis 15, wobei das Link-Ressourcenbericht-Erzeugungsmodul (52) dazu ausgelegt ist, Informationen über die physikalische Qualität der alternativen Link-Ressource in einem Link-Ressourcenbericht einzuschließen.

## Revendications

1. Procédé pour gérer une connexion dans un réseau de communication (1, 101, 201) possédant un plan de commande sur base IP, le procédé comprenant les étapes suivantes :
Échange de messages de signalisation (20) entre deux extrémités de la connexion sur un chemin de connexion dans le réseau de communication afin de spécifier les ressources de liaison à utiliser par la connexion, au moins l'un des messages de signalisation incluant un identifiant d'élément de réseau (NOTIFY REQUEST) qui identifie un appareil de gestion de la restauration (4, 104, 204) associé à la connexion,
**caractérisé par** les étapes suivantes :
Mesure d'une qualité physique (22) d'une ressource de liaison (12, 112, 212) connectée à un élément de réseau (6, 106, 206) qui appartient au chemin de connexion et incluant une ressource de liaison alternative aux ressources de liaison utilisées par la connexion, et
Envoi d'un rapport de ressource de liaison (23) sous la forme d'un message de plan de commande contenant des informations sur la ressource de liaison alternative à l'appareil de gestion de la restauration depuis l'élément de réseau qui fait partie du chemin de connexion afin de permettre à l'appareil de gestion de restauration de déclencher une modification de la connexion (25) à travers la ressource de liaison alternative.

2. Procédé selon la revendication 1, la connexion étant établie sous la forme d'un chemin à commutation d'étiquettes en utilisant le protocole de signalisation RSVP-TE et le rapport de ressource de liaison étant envoyé sous la forme d'un message de notification rapide du protocole de signalisation RSVP-TE.

3. Procédé selon la revendication 1 ou 2, la ressource de liaison utilisée par la connexion comprenant un premier canal (111, 211) sur une interface hertzienne de l'élément de réseau et la ressource de liaison alternative comprenant un deuxième canal (112, 212) sur une interface hertzienne de l'élément de réseau.

4. Procédé selon l'une quelconque des revendications 1 à 3, l'élément de réseau (6, 106, 206) se trouvant à une extrémité de réception de la connexion.

5. Appareil de gestion de la restauration (70) pour gérer la restauration d'une connexion comprenant un chemin à commutation d'étiquettes dans un réseau de communication possédant un plan de commande sur base IP, comprenant :
Un contrôleur de restauration (72) pour déclencher une modification de la connexion à travers une ressource de liaison alternative aux ressources de liaison utilisées précédemment par la connexion.
**caractérisé en ce qu'**il comprend un module d'analyse de rapport de ressource de liaison (82) pour reconnaître les informations relatives à la ressource de liaison alternative dans un rapport de ressource de liaison reçu par l'appareil de gestion de la restauration sous la forme d'un message de notification rapide du protocole de signalisation RSVP-TE.

6. Appareil de gestion de la restauration selon la revendication 5, comprenant en outre un module de test (72) pour tester une condition physique de restauration de la connexion en fonction d'au moins un paramètre inclus dans le rapport de ressource de liaison, ledit au moins un paramètre étant choisi dans un groupe comprenant une qualité physique d'une ressource de liaison utilisée par la connexion et une qualité physique de la ressource de liaison alternative.

7. Appareil de gestion de la restauration selon la revendication 5 ou 6, comprenant en outre un module de calcul (78) pour calculer un nouveau chemin pour la connexion en utilisant la ressource de liaison alternative identifiée dans le rapport de ressource de liaison.

8. Appareil de gestion de la restauration selon l'une quelconque des revendications 5 à 7, comprenant en outre un module de sélection (72) pour sélectionner une ressource de liaison alternative à utiliser par la connexion modifiée parmi une pluralité de ressources de liaison alternatives identifiées dans au moins un rapport de ressource de liaison reçu par l'appareil de gestion de la restauration.

9. Élément de réseau (60) pour un réseau de communication possédant un plan de commande sur base IP, comprenant :
un contrôleur de signalisation (54) pour échanger des messages de signalisation avec au moins un élément de réseau voisin (5, 7, 104, 205, 207) afin d'établir une connexion qui utilise au moins une ressource de liaison (11, 111, 211) connectée à l'élément de réseau,
un module d'analyse de message de signalisation (54) pour reconnaître dans au moins l'un des messages de signalisation un identifiant d'élément de réseau (NOTIFY REQUEST) qui identifie un appareil de gestion de la restauration associé à la connexion,
un module de mesure (51) pour mesurer une qualité physique d'une ressource de liaison (12, 112, 212) connectée à l'élément de réseau et comprenant une alternative aux ressources de liaison utilisées par la connexion, et
un module générateur de rapport de ressource de liaison (52, 54) pour générer un rapport de ressource de liaison contenant des informations sur la ressource de liaison alternative et
pour envoyer le rapport de ressource de liaison sous la forme d'un message de plan de commande à l'appareil de gestion de la restauration identifié par l'identifiant d'élément de réseau.

10. Élément de réseau selon la revendication 9, la ressource de liaison utilisée par la connexion comprenant un premier canal (111, 211) sur une interface hertzienne de l'élément de réseau et la ressource de liaison alternative comprenant un deuxième canal (112, 212) sur une interface hertzienne de l'élément de réseau.

11. Élément de réseau selon la revendication 9 ou 10, comprenant en outre un module de détection (52) pour détecter un événement déclencheur de rapport de ressource de liaison en fonction d'au moins un paramètre sélectionné dans un groupe comprenant une qualité physique d'une ressource de liaison utilisée par la connexion et une qualité physique de la ressource de liaison alternative, le module de génération de rapport de ressource de liaison étant capable d'envoyer un rapport de ressource de liaison en réponse à l'événement déclencheur détecté.

12. Élément de réseau selon l'une quelconque des revendications 9 à 11, la connexion étant établie sous la forme d'un chemin à commutation d'étiquettes en utilisant le protocole de signalisation RSVP-TE et le rapport de ressource de liaison étant envoyé sous la forme d'un message de notification rapide du protocole de signalisation RSVP-TE.

13. Élément de réseau selon l'une quelconque des revendications 9 à 12, le module de mesure étant capable de mesurer une qualité physique d'une pluralité de ressources de liaison alternatives connectées à l'élément de réseau.

14. Élément de réseau selon la revendication 13, comprenant en outre un module de sélection (52) pour sélectionner au moins une ressource de liaison alternative possédant un niveau de qualité supérieur parmi la pluralité de ressources de liaison alternatives afin d'identifier l'au moins une ressource de liaison alternative sélectionnée dans le rapport de ressource de liaison.

15. Élément de réseau selon l'une quelconque des revendications 9 à 14, l'élément de réseau (6, 106, 206) se trouvant à une extrémité de réception de la connexion.

16. Élément de réseau selon l'une quelconque des revendications 9 à 15, le module de génération de rapport de ressource de liaison (52) étant capable d'inclure des informations sur la qualité physique de la ressource de liaison alternative dans un rapport de ressource de liaison.
